# EUROPEAN PATENT SPECIFICATION

(11) **EP 2 364 545 B1**
(45) Date of publication and mention of the grant of the patent: **12.06.2019**
(21) Application number: 09752022.5
(22) Date of filing: 21.10.2009
(51) Int. Cl.: H04M 3/523

(54) **TWO STEP ROUTING PROCEDURE IN A CALL CENTER**
ZWEISCHRITTIGE ROUTING-PROZEDUR IN EINEM ANRUFZENTRALE
SYSTÈMES ET PROCÉDÉS DANS UN SYSTÈME DE ROUTAGE DE CENTRE D'APPEL

(30) Priority: 06.11.2008 US 266461; 06.11.2008 US 266446
(43) Date of publication of application: 14.09.2011
(73) Proprietor: Afiniti International Holdings, Ltd., Hamilton, Bermuda HM11 (BM)
(72) Inventor: CHISHTI, Zia, Hamilton Hm Fx (BM)
(74) Representative: Brunner, John Michael Owen
(86) International application number: PCT/US2009/061537
(87) International publication number: WO 2010/053701

(56) References cited:
- EP-A- 0 493 292
- EP-A- 0 949 793
- EP-A2- 0 863 651
- EP-A2- 0 863 651
- EP-A2- 1 107 557
- EP-A2- 1 107 557
- US-A1- 2005 013 428
- US-A1- 2005 013 428
- US-A1- 2006 222 164
- US-B1- 7 023 979
- US-B1- 7 023 979

## Description

### CROSS REFERENCE TO RELATED APPLICATION

This application is related to U.S. Patent Application Serial No. 12/021,251, filed January 28, 2008.

The application claims priority to US Application Serial No. 12/266,446, filed November 6, 2008, entitled "Selective Mapping of Callers in a Call Center Routing Environment" and to US Application Serial No. 12/266,461, filed November 6, 2008, entitled "Balancing Multiple Computer Models in a Call Center Routing System'.

### BACKGROUND

### 1. Field:

The present invention relates generally to the field of routing phone calls and other telecommunications in a contact center system.

### 2. Related Art:

The typical contact center consists of a number of human agents, with each assigned to a telecommunication device, such as a phone or a computer for conducting email or Internet chat sessions, that is connected to a central switch. Using these devices, the agents are generally used to provide sales, customer service, or technical support to the customers or prospective customers of a contact center or a contact center's clients.

Typically, a contact center or client will advertise to its customers, prospective customers, or other third parties a number of different contact numbers or addresses for a particular service, such as for billing questions or for technical support. The customers, prospective customers, or third parties seeking a particular service will then use this contact information, and the incoming caller will be routed at one or more routing points to a human agent at a contact center who can provide the appropriate service. Contact centers that respond to such incoming contacts are typically referred to as "inbound contact centers."

Similarly, a contact center can make outgoing contacts to current or prospective customers or third parties. Such contacts may be made to encourage sales of a product, provide technical support or billing information, survey consumer preferences, or to assist in collecting debts. Contact centers that make such outgoing contacts are referred to as "outbound contact centers."

In both inbound contact centers and outbound contact centers, the individuals (such as customers, prospective customers, survey participants, or other third parties) that interact with contact center agents using a telecommunication device are referred to in this application as a "caller." The individuals acquired by the contact center to interact with callers are referred to in this application as an "agent."

Conventionally, a contact center operation includes a switch system that connects callers to agents. In an inbound contact center, these switches route incoming callers to a particular agent in a contact center, or, if multiple contact centers are deployed, to a particular contact center for further routing. In an outbound contact center employing telephone devices, dialers are typically employed in addition to a switch system. The dialer is used to automatically dial a phone number from a list of phone numbers, and to determine whether a live caller has been reached from the phone number called (as opposed to obtaining no answer, a busy signal, an error message, or an answering machine). When the dialer obtains a live caller, the switch system routes the caller to a particular agent in the contact center.

Routing technologies have accordingly been developed to optimize the caller experience. For example, U.S. Patent No. 7,236,584 describes a telephone system for equalizing caller waiting times across multiple telephone switches, regardless of the general variations in performance that may exist among those switches. Contact routing in an inbound contact center, however, is a process that is generally structured to connect callers to agents that have been idle for the longest period of time. In the case of an inbound caller where only one agent may be available, that agent is generally selected for the caller without further analysis. In another example, if there are eight agents at a contact center, and seven are occupied with contacts, the switch will generally route the inbound caller to the one agent that is available. If all eight agents are occupied with contacts, the switch will typically put the contact on hold and then route it to the next agent that becomes available. More generally, the contact center will set up a queue of incoming callers and preferentially route the longest-waiting callers to the agents that become available over time. Such a pattern of routing contacts to either the first available agent or the longest-waiting agent is referred to as "round-robin" contact routing. In round robin contact routing, eventual matches and connections between a caller and an agent are essentially random.

Some attempts have been made to improve upon these standard yet essentially random processes for connecting a caller to an agent. For example, U.S. Patent No. 7,209,549 describes a telephone routing system wherein an incoming caller's language preference is collected and used to route their telephone call to a particular contact center or agent that can provide service in that language. In this manner, language preference is the primary driver of matching and connecting a caller to an agent, although once such a preference has been made, callers are almost always routed in "round-robin" fashion.

EP 0 863 651 A2 discloses an waiting-call selection based on assigning different service-time objectives which represent limits on the amount of time that calls should spend waiting for agents before being handled.

US 2005/013428 A1 discloses a contact center optimization program where a benchmark analyzer collects operational data relating to other contact centres.

US 7 023 979 B1 discloses a telephony control system which changes routing method based on whether the call centre is near capacity.

EP 1 107 557 A2 discloses a system for automatically routing calls to call centre agents in an agent surplus condition based on delay probabilities based on an automatic agent assignment paradigm.

### BRIEF SUMMARY

Systems and methods of the present invention are according to the claims as filed and can be used to improve or optimize the routing of callers to agents in a contact center. According to one aspect of the present invention, a method for routing callers to agents in a call-center routing system includes using a multi-layer processing approach to matching a caller to an agent, where a first layer of processing includes two or more different computer models or methods for matching callers to agents. The output of the first layer, e.g., the output of the different methods for matching the callers to agents, is received by a second layer of processing for balancing or weighting the outputs and selecting a final caller-agent match for routing.

In one example, the two or more models or methods may include conventional queue based routing, performance based matching (e.g., ranking a set of agents based on performance and preferentially matching callers to the agents based on a performance ranking or score), pattern matching algorithms (e.g., comparing agent data associated with a set of callers to agent data associated a set of agents and determining a suitability score of different caller-agent pairs), affinity data matching, and other models for matching callers to agents. The methods may therefore operate to output scores or rankings of the callers, agents, and/or caller-agent pairs for a desired optimization (e.g., for optimizing cost, revenue, customer satisfaction, and so on).

The output or scores of the two or more methods may be processed to select a caller-agent pair and cause the caller to be routed to a particular agent. For instance, the output of the two or more methods may be balanced or weighted against
each other to determine a matching agent-caller pair. In one example, the output of the different methods may be balanced equally to determine routing instructions (e.g., the scores can be standardized and weighted evenly to determine a "best" matching agent-caller pair from the different methods). In other examples, the methods may be unbalanced, e.g., weighting a pattern matching algorithm output greater than a performance based routing output and so on.

Additionally, an interface may be presented to a user allowing for adjustment of the balancing of the methods, e.g., a slider or selector for adjusting the balance in real-time or a predetermined time. The interface may allow a user to turn certain methods on and off, change desired optimizations, and may display an estimated effect of the balancing or a change in balancing of the different routing methods.

In some examples, an adaptive algorithm (such as a neural network or genetic algorithm) may be used to receive, as input, the outputs of the two or more models to output a caller-agent pair. The adaptive algorithm may compare performance over time and adapt to pick the best model for a desired outcome variable.

According to another aspect, apparatus is provided comprising logic for mapping and routing callers to agents. The apparatus may include logic for receiving input data associated with callers and agents at a first layer of processing, the first layer of processing including at least two models for matching callers to agents, each model outputting output data for at least one caller-agent pair. The apparatus may further include logic for receiving the output data from each processing model at a second layer of processing, the second layer of processing operable to balance the output data of the at least two models and map a caller to an agent based on the received outputs.

Additionally, systems and methods of the present invention can be used to improve or optimize the routing of callers to agents in a contact center. According to one aspect, a method for routing callers to agents in a call-center routing system includes mapping a first portion or fraction of callers to agents based on agent performance data and/or a pattern matching algorithm. The agent performance data may include grades or a ranking for different agents based on desired performance outcomes. The pattern matching algorithm may operate to compare caller data associated with each caller to agent data associated with each agent. The method further includes mapping a second portion or fraction of the callers to agents differently than the first portion of callers. For example, the second portion of callers may be mapped to agents based on a random process such as an Automatic Call Distribution (ACD) queue order or according to a performance based order of the agents, where the second portion of callers may serve as a control group or benchmark to assist in accessing the performance of the performance and/or pattern matching algorithms for mapping the first portion of callers to agents.

In one example, the method further includes causing the display of a graphical element for adjusting the number or fraction of callers mapped via performance and/or pattern matching algorithms. The method may further display the estimated effect of the number of callers or a change thereto on one or more outcome variables of the performance and/or pattern matching algorithms for mapping the callers.

According to another aspect, an interface is provided for use with an inbound or outbound call routing center for routing callers based on performance of agents and/or pattern matching algorithms between callers and agents. In one example, the interface includes a graphical element (e.g., a selector, slider, text field, or the like) for setting and adjusting the portion or number of callers that are routed based on the performance of agents and/or pattern matching algorithms as opposed to a random or conventional routing method (e.g., based on queue order of the agents and/or callers). For instance, the graphical element allowing a contact center operator the ability to route a first portion or fraction of the callers to agents via a pattern matching algorithm and route the remaining callers by a different process, e.g., based on queue order or the like. Such a system and method may allow for a control group of caller-agent pairs to be connected for comparing and analyzing the effects of routing based on the pattern matching algorithm.

In one example the interface is further operable to display an estimated effect of the number or percentage of callers mapped on at least one outcome variable. For instance, the interface operates to display estimated revenue generation, cost, customer satisfaction, first call resolution, cancellation, or other outcome variables of the performance and/or pattern matching algorithm(s) based on a particular setting of the number of calls to be mapped according to the performance and/or pattern matching algorithm(s). The outcome variables may be estimated based on past call history data, stored algorithms, look-up tables, or the like. Further, the interface may be operable to display an estimated change in the at least one outcome variable if the selection of the number of calls mapped is changed.

According to another aspect, apparatus is provided comprising logic for mapping and routing callers to agents. The apparatus may include logic for mapping a first portion (or fraction) of callers to agents according to a pattern matching algorithm based on comparing caller data associated with the callers and agent data associated with the agents. The apparatus may further include mapping a second portion of the callers (e.g., the remaining portion or fraction of all callers) to agents differently than the first portion of the callers (e.g., mapping based on queue order, a random process, or based on performance alone), which may provide a control group for monitoring or analyzing the effect of the pattern matching algorithm. Further, the apparatus may operate to cause the display of a graphical element with an interface for adjusting the portion or number of callers routed or mapped via a performance and/or pattern matching algorithm.

Many of the techniques described here may be implemented in hardware, firmware, software, or combinations thereof. In one example, the techniques are implemented in computer programs executing on programmable computers that each includes a processor, a storage medium readable by the processor (including volatile and nonvolatile memory and/or storage elements), and suitable input and output devices. Program code is applied to data entered using an input device to perform the functions described and to generate output information. The output information is applied to one or more output devices. Moreover, each program is preferably implemented in a high level procedural or object-oriented programming language to communicate with a computer system. However, the programs can be implemented in assembly or machine language, if desired. In any case, the language may be a compiled or interpreted language.

### BRIEF DESCRIPTION OF THE DRAWINGS

**Figure 1** is a diagram reflecting the general setup of a contact center operation.
**Figure 2** illustrates an exemplary routing system having a routing engine for routing callers based on performance and/or pattern matching algorithms.
**Figure 3** illustrates an exemplary routing system having a mapping engine for routing callers based on performance and/or pattern matching algorithms.
**Figure 4** illustrates an exemplary multi-layer approach to selecting a caller-agent pair based on multiple matching methods.
**Figure 5** illustrates an exemplary method for scoring or ranking agents, callers, and/or agent-caller pairs according to at least two different methods and matching a caller to an agent based on a balancing of the at least two different methods.
**Figure 6** illustrates another exemplary method for scoring or ranking agents, callers, and/or agent-caller pairs according to at least two different methods and matching a caller to an agent based on a balancing of the at least two different methods.
**Figure 7** illustrates an exemplary method or computer model for matching callers to agents based on performance.
**Figure 8** illustrates an exemplary method or computer model for matching callers to agents based on caller data and agent data.
**Figure 9** illustrates a typical computing system that may be employed to implement some or all processing functionality in certain embodiments of the invention.
**Figure 10** illustrates an exemplary method for matching a first portion of callers and agents using caller data and agent data in a pattern matching algorithm and a second portion of callers using queue order.
**Figure 11** illustrates an exemplary interface having a graphic element for adjusting the number or fraction of callers for routing based on performance and/or pattern matching algorithms.

### DETAILED DESCRIPTION OF THE INVENTION

The following description is presented to enable a person of ordinary skill in the art to make and use the invention, and is provided in the context of particular applications and their requirements. Various modifications to the embodiments will be readily apparent to those skilled in the art, and the generic principles defined herein may be applied to other embodiments and applications without departing from the scope of the invention. Moreover, in the following description, numerous details are set forth for the purpose of explanation. However, one of ordinary skill in the art will realize that the invention might be practiced without the use of these specific details. In other instances, well-known structures and devices are shown in block diagram form in order not to obscure the description of the invention with unnecessary detail. Thus, the present invention is not intended to be limited to the embodiments shown, but is to be accorded the widest scope consistent with the principles and features disclosed herein.

While the invention is described in terms of particular examples and illustrative figures, those of ordinary skill in the art will recognize that the invention is not limited to the examples or figures described. Those skilled in the art will recognize that the operations of the various embodiments may be implemented using hardware, software, firmware, or combinations thereof, as appropriate. For example, some processes can be carried out using processors or other digital circuitry under the control of software, firmware, or hard-wired logic. (The term "logic" herein refers to fixed hardware, programmable logic and/or an appropriate combination thereof, as would be recognized by one skilled in the art to carry out the recited functions.) Software and firmware can be stored on computer-readable storage media. Some other processes can be implemented using analog circuitry, as is well known to one of ordinary skill in the art. Additionally, memory or other storage, as well as communication components, may be employed in embodiments of the invention.

According to one aspect of the present invention systems, methods, and displayed computer interfaces are provided for routing callers to agents within a call center. In one example, a method includes using a first layer of processing, the first layer including two or more methods or models for determining caller-agent pairs. For example, the two or more methods may include conventional queue based routing, performance based matching (e.g., ranking a set of agents based on performance and preferentially matching callers to the agents based on a performance ranking or score), pattern matching algorithms (e.g., comparing agent data associated with a set of callers to agent data associated a set of agents and determine a suitability score of different caller-agent pairs), affinity data matching, and other models for matching callers to agents. The methods may therefore operate to output scores or rankings of the callers, agents, and/or caller-agent pairs for a desired optimization (e.g., for optimizing cost, revenue, customer satisfaction, and so on) to a second layer of processing. The second layer of processing may receive the output of the first layer and determine an agent-caller pair based on the output of different methods of the first layer of processing. In one example, the second layer of processing includes a computer model to balance or weight the different outputs, which may be altered by a user.

Initially, exemplary call routing systems and methods utilizing performance and/or pattern matching algorithms (either of which may be used within generated computer models for predicting the chances of desired outcomes) are described for routing callers to available agents. This description is followed by exemplary systems and methods for multi-layer processing of input data to select a caller-agent pairing.

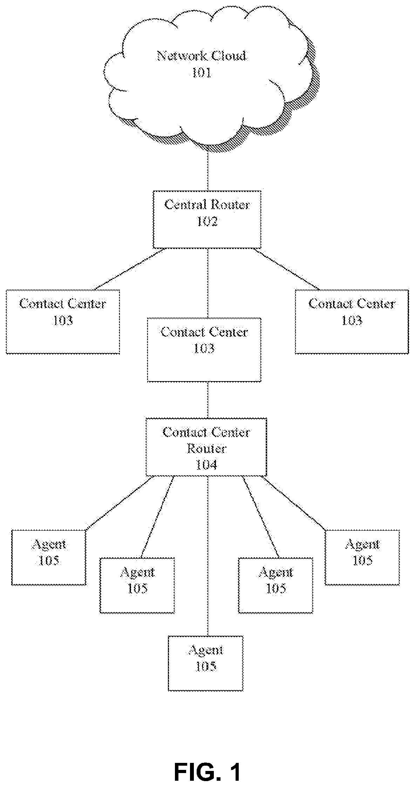

**Figure 1** is a diagram reflecting the general setup of a contact center operation 100. The network cloud 101 reflects a specific or regional telecommunications network designed to receive incoming callers or to support contacts made to outgoing callers. The network cloud 101 can comprise a single contact address, such as a telephone number or email address, or multiple contract addresses. The central router 102 reflects contact routing hardware and software designed to help route contacts among call centers 103. The central router 102 may not be needed where there is only a single contact center deployed. Where multiple contact centers are deployed, more routers may be needed to route contacts to another router for a specific contact center 103. At the contact center level 103, a contact center router 104 will route a contact to an agent 105 with an individual telephone or other telecommunications equipment 105. Typically, there are multiple agents 105 at a contact center 103, though there are certainly embodiments where only one agent 105 is at the contact center 103, in which case a contact center router 104 may prove to be unnecessary.

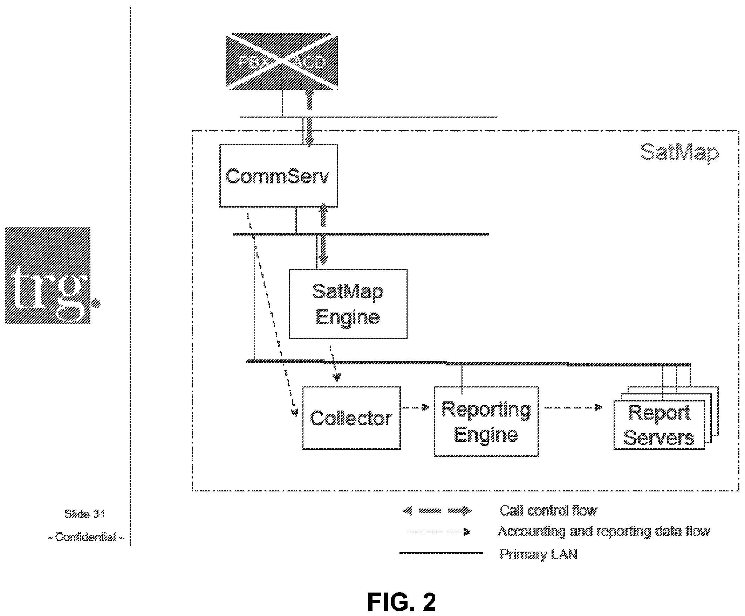

**Figure 2** illustrates an exemplary contact center routing system 200 (which may be included with contact center router 104 of **Figure 1**). Broadly speaking, routing system 200 is operable to match callers and agents based, at least in part, on agent performance or pattern matching algorithms using caller data and/or agent data. Routing system 200 may include a communication server 202 and a routing engine 204 (referred to at times as "SatMap" or "Satisfaction Mapping") for receiving and matching callers to agents (referred to at times as "mapping" callers to agents).

Routing engine 204 may operate in various manners to match callers to agents based on performance data of agents, pattern matching algorithms, and computer models, which may adapt over time based on the performance or outcomes of previous caller-agent matches. In one example, the routing engine 204 includes a neural network based adaptive pattern matching engine. Various other exemplary pattern matching and computer model systems and methods which may be included with content routing system and/or routing engine 204 are described, for example, in U.S. Serial No. 12/021,251, filed January 28, 2008, and U.S. Serial No. U.S. Patent application serial no. 12/202,091, filed August 29, 2008. Of course, it will be recognized that other performance based or pattern matching algorithms and methods may be used alone or in combination with those described here.

Routing system 200 may further include other components such as collector 206 for collecting caller data of incoming callers, data regarding caller-agent pairs, outcomes of caller-agent pairs, agent data of agents, and the like. Further, routing system 200 may include a reporting engine 208 for generating reports of performance and operation of routing system 200. Various other servers, components, and functionality are possible for inclusion with routing system 200. Further, although shown as a single hardware device, it will be appreciated that various components may be located remotely from each other (e.g., communication server 202 and routing engine 204 need not be included with a common hardware/server system or included at a common location). Additionally, various other components and functionality may be included with routing system 200, but have been omitted here for clarity.

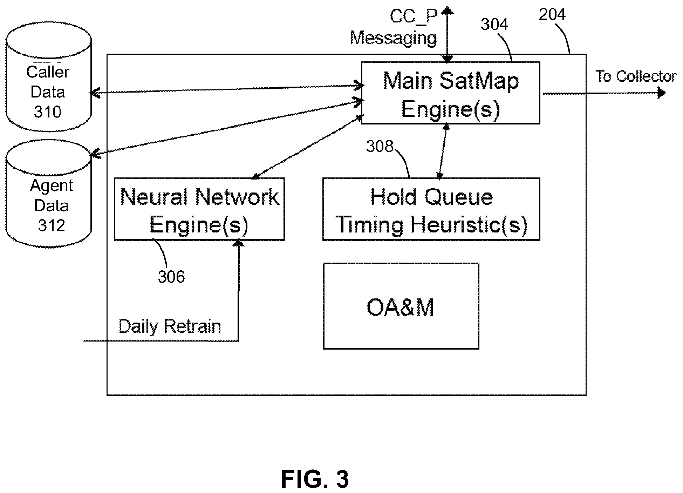

**Figure 3** illustrates detail of exemplary routing engine 204. Routing engine 204 includes a main mapping engine 304, which receives caller data and agent data from databases 310 and 312. In some examples, routing engine 204 may route callers based solely or in part on performance data associated with agents. In other examples, routing engine 204 may make routing decisions based solely or in part on comparing various caller data and agent data, which may include, e.g., performance based data, demographic data, psychographic data, and other business-relevant data. Additionally, affinity databases (not shown) may be used and such information received by routing engine 204 for making routing decisions.

In one example, routing engine 204 includes or is in communication with one or more neural network engines 306. Neural network engines 306 may receive caller and agent data directly or via routing engine 204 and operate to match and route callers based on pattern matching algorithms and computer models generated to increase the changes of desired outcomes. Further, as indicated in **Figure 3****,** call history data (including, e.g., caller-agent pair outcomes with respect to cost, revenue, customer satisfaction, etc.) may be used to retrain or modify the neural network engine 306.

Routing engine 204 further includes or is in communication with hold queue 308, which may store or access hold or idle times of callers and agents, and operates to map callers to agents based on queue order of the callers (and/or agents). Mapping engine 304 may operate, for example, to map callers based on a pattern matching algorithm, e.g., as included with neural network engine 306, or based on queue order, e.g., as retrieved from hold queue 308.

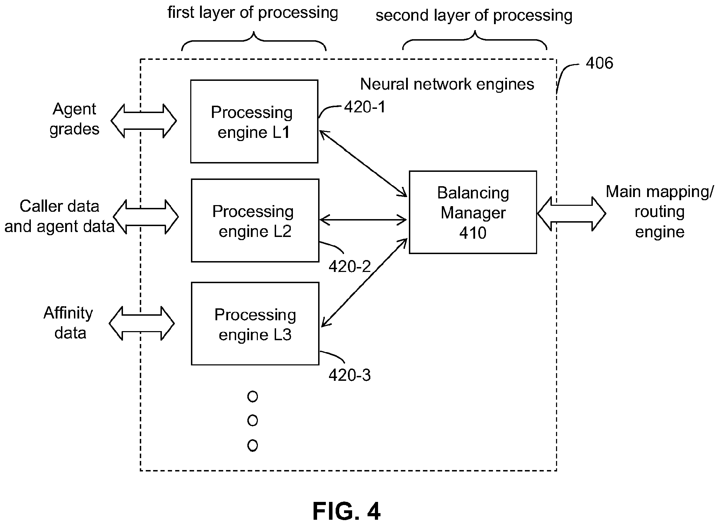

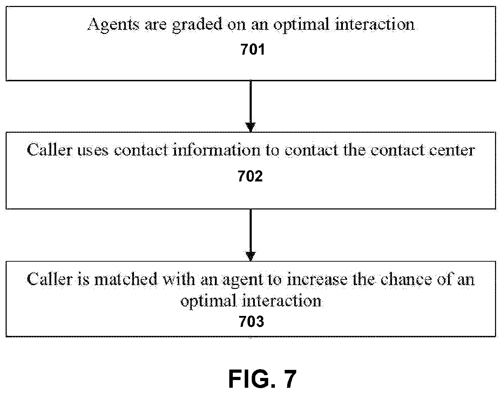

**Figure 4** illustrates an exemplary mapping system 406. Mapping system 406 includes two layers of processing - a first layer includes at least two processing engines or computer models as indicated by 420-1, 420-2, and 420-3. The processing engines 420-1, 420-2, and 420-3 may each operate on different data and/or according to a different model or method for matching callers to agents. In this particular example, processing engine 420-1 may receive agent grade data, e.g., data associated with agent performance for a particular desired performance. As will be described in further detail with respect to **Figure 7** below, performance based routing may include ranking or scoring a set of agents based on performance for a particular outcome (such as revenue generation, cost, customer satisfaction, combinations thereof, and the like) and preferentially routing callers to agents based on a performance ranking or score. Accordingly, processing engine 420-1 may receive agent grades or agent history data and output one or more rankings of agents based on one or more desired outcome variables.

Processing engine 420-2, in this example, includes one or more pattern matching algorithms, which may operate to compare agent data associated with a set of callers to agent data associated a set of agents and determine a suitability score of each caller-agent pair. Processing engine 420-2 may receive caller data and agent data from various databases and output caller-agent pair scores or a ranking of caller-agent pairs, for example. The pattern matching algorithm may include a neural network algorithm, genetic algorithm, or other adaptive algorithms. Further, in some examples, different processing engines may be used with different pattern matching algorithms operating on the same or different input data, e.g., a first processing engine utilizing a neural network algorithm and a second processing engine utilizing a different algorithm such as a genetic algorithm or other pattern matching algorithm. Additionally, first and second processing engines may include similar pattern matching algorithms operable to maximize different output variables; for example, a first neural network algorithm operable to maximize revenue and a second neural network algorithm operable to maximize customer satisfaction.

Processing engine 420-3, in this example, includes one or more affinity matching algorithms, which operate to receive affinity data associated with the callers and/or agents. Processing engine 420-3 may receive affinity data from various databases and output caller-agent pairs or a ranking of caller-agent pairs based, at least in part, on the affinity data. It should be noted that various other methods or models may be used in the first layer of processing, and further that the first layer of processing may include multiple sub-layers of processing (e.g., processing engine 420-1 outputting to processing engine 420-2 and so on). Further, in some examples a processing engine may include conventional queue based routing, e.g., routing agents and callers based on queue order.

As described, the processing engines 420-1, 420-2, and 420-3 each output scores or rankings of the callers, agents, and/or caller-agent pairs for a desired optimization (e.g., for optimizing cost, revenue, customer satisfaction, and so on). The output or scores of the two or more methods may then be processed by balancing manager 410, e.g., at the second level of processing, to select a caller-agent pair. For instance, the output of processing engines 420-1, 420-2, and 420-3 is received by balancing manager 410 and may be weighted against each other to determine a matching agent-caller pair. In one example, the outputs of processing engines 420-1, 420-2, and 420-3 are balanced equally to determine routing instructions (e.g., the scores can be standardized and weighted evenly to determine a "best" matching agent-caller pair). In other examples, the methods may be unbalanced, e.g., weighting a pattern matching algorithm method output greater than a performance based routing method, turning certain processing engines "off', and so on.

Additionally, an interface may be presented to a user allowing for adjustment of balancing manager 410, e.g., a slider or selector for adjusting the balance of the processing engines in real-time or at a predetermined time. Additionally, the interface may allow a user to turn certain methods on and off, and may display an estimated effect of the balancing or a change in the balancing. For instance, an interface may display the probable change in one or more of cost, revenue generation, or customer satisfaction by changing the operation of balancing manager 410. Various estimation methods and algorithms for estimating outcome variables are described, for example, in copending U.S. provisional Patent application serial no. 61/084,201, filed on July 28, 2008. In one example, the estimate includes evaluating a past time period of the same (or similar) set of agents and constructing a distribution of agent/caller pairs. Using each pair, an expected success rate can be computed via the performance based matching, pattern matching algorithm, etc., and applied to current information to estimate current performance (e.g., with respect to one or more of sales, cost, customer satisfaction, etc.). Accordingly, taking historical call data and agent information the system can compute estimates of changing the balance or weighting of the level one processing methods. It is noted that a comparable time (e.g., time of day, day of the week etc.) for the historical information may be important as performance will likely vary with time.

In some examples, balancing manager 410 may include an adaptive algorithm (such as a neural network or genetic algorithm) for receiving, as input, the outputs of the two or more models to output a caller-agent pair. Accordingly, balancing manger 410 via an adaptive algorithm may compare performance over time and adapt to pick or weight the level one processing engines to increase the chances of a desired outcome.

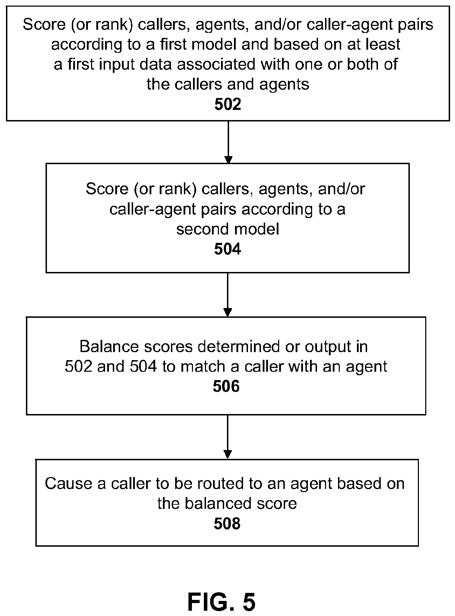

**Figure 5** illustrates an exemplary method for scoring or ranking agents, callers, and/or agent-caller pairs according to at least two different computer models or methods and matching a caller to an agent based on a balancing of the at least two different models. In this example, a caller, agent, or caller-agent pair is scored based on at least first input data at 502. The input data may include agent performance grades, caller data and/or agent data, queue order of the callers and agents, combinations thereof, and so on. Further, the score may include a raw score, normalized score, ranking relative to other callers, agents, and/or caller-agent pairs, and so on.

The method further includes scoring callers, agents, or caller-agent pairs at 504 according to a second model for mapping callers to agents, the second model different than the first model. Note, however, the second model may use some or all of the same first input data as used in 502 or may rely on different input data, e.g., at least a second input data. Similarly, the scoring may include a raw score, normalized score, ranking relative to other callers, agents, and/or caller-agent pairs, and so on.

The scores determined in 502 and 504 may be balanced at 506 to determine routing instructions for a caller. The balancing may include weighting scores from 502 and 504 equally or unequally, and may be adjusted over time by a user or in response to adaptive feedback of the system. It will also be recognized that the scores output from 502 and 504 may be normalized in any suitable fashion, e.g., computing a Z-score or the like as described in co-pending U.S. Patent Application Serial No. 12/202,091, filed on August 29, 2008.

The final selection or mapping of a caller to an agent may then be passed to a routing engine or router for causing the caller to be routed to the agent at 508. It is noted that the described actions do not need to occur in the order in which they are stated and some acts may be performed in parallel (for example, the first layer processing of 502 and 504 may be performed partially or wholly in parallel). Further, additional models for scoring and mapping callers to agents may be used and output to the balancing at 506 for determining a final selection of a caller-agent pair.

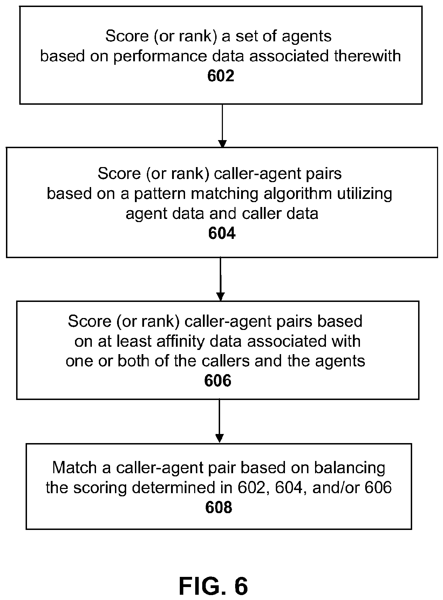

**Figure 6** illustrates another exemplary method for scoring or ranking agents, callers, and/or agent-caller pairs according to at least two different methods and matching a caller to an agent based on a balancing of the at least two different methods. In this particular example, a first model operates to score a set of agents based on performance at 602, and may output a ranking or score associated with the performance of the agents. Such a method for ranking agents based on performance is described in greater detail with respect to **Figure 7** below.

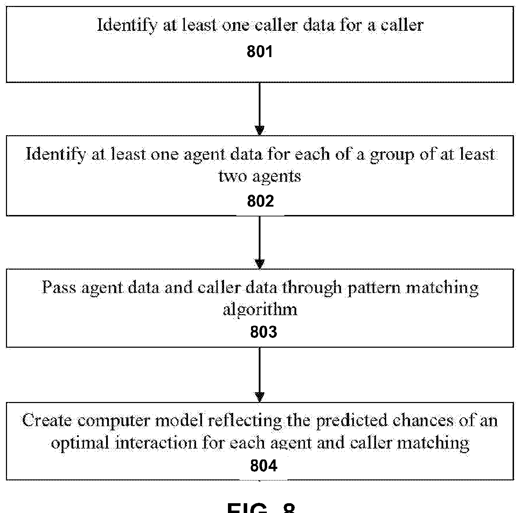

The method further includes scoring caller-agent pairs at 604 according to a second model for mapping callers to agents, in particular, according to a pattern matching algorithm. The pattern matching algorithm may include comparing caller data and agent data for each caller-agent pair and computing a suitability score or ranking of caller-agent pairs for a desired outcome variable (or weighting of outcome variables). Such a pattern matching algorithm is described in greater detail with respect to **Figure 8** below, and may include a neural network algorithm.

The method further includes scoring caller-agent pairs at 606 according to a third model for mapping callers to agents based on affinity data. The use of affinity data and affinity databases alone or in combination with pattern matching algorithms is described in greater detail below.

The scores (or rankings) determined in 602, 604, and 606 may be balanced at 608 to determine the routing instructions for a caller. The balancing may include weighting scores from 602, 604, and 606 equally or unequally, and may be adjusted by a user or in response to adaptive feedback of the system. It will also be recognized that the scores output from 602, 604, and 60 may be normalized in any suitable fashion as described with respect to **Figure 5****.**

The final selection or mapping of a caller to an agent may then be passed to a routing engine or router for causing the caller to be routed to the agent. It is again noted that the described actions do not need to occur in the order in which they are stated and some acts may be performed in parallel (for example, the first layer processing of 602, 604, and 606 may be performed partially or wholly in parallel). Further, additional (or fewer) matching models for scoring and mapping callers to agents may be used and output to the balancing at 608 for determining a final selection of a caller-agent pair.

**Figure 7** illustrates a flowchart of an exemplary method or model for matching callers to agents based on performance. The method includes grading two agents on an optimal interaction and matching a caller with at least one of the two graded agents to increase the chance of the optimal interaction. At the initial block 701, agents are graded on an optimal interaction, such as increasing revenue, decreasing costs, or increasing customer satisfaction. Grading can be accomplished by collating the performance of a contact center agent over a period of time on their ability to achieve an optimal interaction, such as a period of at least 10 days. However, the period of time can be as short as the immediately prior contact to a period extending as long as the agent's first interaction with a caller. Moreover, the method of grading agent can be as simple as ranking each agent on a scale of 1 to N for a particular optimal interaction, with N being the total number of agents. The method of grading can also comprise determining the average contact handle time of each agent to grade the agents on cost, determining the total sales revenue or number of sales generated by each agent to grade the agents on sales, or conducting customer surveys at the end of contacts with callers to grade the agents on customer satisfaction. The foregoing, however, are only examples of how agents may be graded; many other methods may be used.

At block 702 a caller uses contact information, such as a telephone number or email address, to initiate a contact with the contact center. At block 703, the caller is matched with an agent or group of agents such that the chance of an optimal interaction is increased, as opposed to just using the round robin matching methods of the prior art. The method may further include grading a group of at least two agents on two optimal interactions, weighting one optimal interaction against another optional interaction, and matching the caller with one of the two graded agents to increase the chance of a more heavily-weighted optimal interaction. In particular, agents may be graded on two or more optimal interactions, such as increasing revenue, decreasing costs, or increasing customer satisfaction, which may then be weighted against each other. The weighting can be as simple as assigning to each optimal interaction a percentage weight factor, with all such factors totaling to 100 percent. Any comparative weighting method can be used, however. The weightings placed on the various optimal interactions can take place in real-time in a manner controlled by the contact center, its clients, or in line with pre-determined rules. Optionally, the contact center or its clients may control the weighting over the internet or some another data transfer system. As an example, a client of the contact center could access the weightings currently in use over an internet browser and modify these remotely. Such a modification may be set to take immediate effect and, immediately after such a modification, subsequent caller routings occur in line with the newly establishing weightings. An instance of such an example may arise in a case where a contact center client decides that the most important strategic priority in their business at present is the maximization of revenues. In such a case, the client would remotely set the weightings to favor the selection of agents that would generate the greatest probability of a sale in a given contact. Subsequently the client may take the view that maximization of customer satisfaction is more important for their business. In this event, they can remotely set the weightings of the present invention such that callers are routed to agents most likely to maximize their level of satisfaction. Alternatively the change in weighting may be set to take effect at a subsequent time, for instance, commencing the following morning

**Figure 8** illustrate another exemplary model or method for matching a caller to an agent, and which may combine agent grades, agent demographic data, agent psychographic data, and other business-relevant data about the agent (individually or collectively referred to in this application as "agent data"), along with demographic, psychographic, and other business-relevant data about callers (individually or collectively referred to in this application as "caller data"). Agent and caller demographic data can comprise any of: gender, race, age, education, accent, income, nationality, ethnicity, area code, zip code, marital status, job status, and credit score. Agent and caller psychographic data can comprise any of introversion, sociability, desire for financial success, and film and television preferences. It will be appreciated that the acts outlined in the flowchart of **Figure 8** need not occur in that exact order.

This exemplary model or method includes determining at least one caller data for a caller, determining at least one agent data for each of two agents, using the agent data and the caller data in a pattern matching algorithm, and matching the caller to one of the two agents to increase the chance of an optimal interaction. At 801, at least one caller data (such as a caller demographic or psychographic data) is determined. One way of accomplishing this is by retrieving this from available databases by using the caller's contact information as an index. Available databases include, but are not limited to, those that are publicly available, those that are commercially available, or those created by a contact center or a contact center client. In an outbound contact center environment, the caller's contact information is known beforehand. In an inbound contact center environment, the caller's contact information can be retrieved by examining the caller's CallerID information or by requesting this information of the caller at the outset of the contact, such as through entry of a caller account number or other caller-identifying information. Other business-relevant data such as historic purchase behavior, current level of satisfaction as a customer, or volunteered level of interest in a product may also be retrieved from available databases.

At 802, at least one agent data for each of two agents is determined. One method of determining agent demographic or psychographic data can involve surveying agents at the time of their employment or periodically throughout their employment. Such a survey process can be manual, such as through a paper or oral survey, or automated with the survey being conducted over a computer system, such as by deployment over a web-browser.

Though this advanced embodiment preferably uses agent grades, demographic, psychographic, and other business-relevant data, along with caller demographic, psychographic, and other business-relevant data, other embodiments of the present invention can eliminate one or more types or categories of caller or agent data to minimize the computing power or storage necessary to employ the present invention.

Once agent data and caller data have been collected, this data is passed to a computational system. The computational system then, in turn, uses this data in a pattern matching algorithm at 803 to create a computer model that matches each agent with the caller and estimates the probable outcome of each matching along a number of optimal interactions, such as the generation of a sale, the duration of contact, or the likelihood of generating an interaction that a customer finds satisfying.

The pattern matching algorithm to be used in the present invention can comprise any correlation algorithm, such as a neural network algorithm or a genetic algorithm. To generally train or otherwise refine the algorithm, actual contact results (as measured for an optimal interaction) are compared against the actual agent and caller data for each contact that occurred. The pattern matching algorithm can then learn, or improve its learning of, how matching certain callers with certain agents will change the chance of an optimal interaction. In this manner, the pattern matching algorithm can then be used to predict the chance of an optimal interaction in the context of matching a caller with a particular set of caller data, with an agent of a particular set of agent data. Preferably, the pattern matching algorithm is periodically refined as more actual data on caller interactions becomes available to it, such as periodically training the algorithm every night after a contact center has finished operating for the day.

At 804, the pattern matching algorithm is used to create a computer model reflecting the predicted chances of an optimal interaction for each agent and caller matching. Preferably, the computer model will comprise the predicted chances for a set of optimal interactions for every agent that is logged in to the contact center as matched against every available caller. Alternatively, the computer model can comprise subsets of these, or sets containing the aforementioned sets. For example, instead of matching every agent logged into the contact center with every available caller, the present invention can match every available agent with every available caller, or even a narrower subset of agents or callers. Likewise, the present invention can match every agent that ever worked on a particular campaign - whether available or logged in or not - with every available caller. Similarly, the computer model can comprise predicted chances for one optimal interaction or a number of optimal interactions.

The computer model can also be further refined to comprise a suitability score for each matching of an agent and a caller. The suitability score can be determined by taking the chances of a set of optimal interactions as predicted by the pattern matching algorithm, and weighting those chances to place more or less emphasis on a particular optimal interaction as related to another optimal interaction. The suitability score can then be used in the present invention to determine which agents should be connected to which callers.

In other examples, exemplary models or methods may utilize affinity data associated with callers and/or agents. For example, affinity data may relate to an individual caller's contact outcomes (referred to in this application as "caller affinity data"), independent of their demographic, psychographic, or other business-relevant information. Such caller affinity data can include the caller's purchase history, contact time history, or customer satisfaction history. These histories can be general, such as the caller's general history for purchasing products, average contact time with an agent, or average customer satisfaction ratings. These histories can also be agent specific, such as the caller's purchase, contact time, or customer satisfaction history when connected to a particular agent.

As an example, a certain caller may be identified by their caller affinity data as one highly likely to make a purchase, because in the last several instances in which the caller was contacted, the caller elected to purchase a product or service. This purchase history can then be used to appropriately refine matches such that the caller is preferentially matched with an agent deemed suitable for the caller to increase the chances of an optimal interaction. Using this embodiment, a contact center could preferentially match the caller with an agent who does not have a high grade for generating revenue or who would not otherwise be an acceptable match, because the chance of a sale is still likely given the caller's past purchase behavior. This strategy for matching would leave available other agents who could have otherwise been occupied with a contact interaction with the caller. Alternatively, the contact center may instead seek to guarantee that the caller is matched with an agent with a high grade for generating revenue, irrespective of what the matches generated using caller data and agent demographic or psychographic data may indicate.

In one example, affinity data and an affinity database developed by the described examples may be one in which a caller's contact outcomes are tracked across the various agent data. Such an analysis might indicate, for example, that the caller is most likely to be satisfied with a contact if they are matched to an agent of similar gender, race, age, or even with a specific agent. Using this embodiment, the present invention could preferentially match a caller with a specific agent or type of agent that is known from the caller affinity data to have generated an acceptable optimal interaction.

Affinity databases can provide particularly actionable information about a caller when commercial, client, or publicly-available database sources may lack information about the caller. This database development can also be used to further enhance contact routing and agent-to-caller matching even in the event that there is available data on the caller, as it may drive the conclusion that the individual caller's contact outcomes may vary from what the commercial databases might imply. As an example, if the present invention was to rely solely on commercial databases in order to match a caller and agent, it may predict that the caller would be best matched to an agent of the same gender to achieve optimal customer satisfaction. However, by including affinity database information developed from prior interactions with the caller, the present invention might more accurately predict that the caller would be best matched to an agent of the opposite gender to achieve optimal customer satisfaction.

Another aspect of the present invention is that it may develop affinity databases that comprise revenue generation, cost, and customer satisfaction performance data of individual agents as matched with specific caller demographic, psychographic, or other business-relevant characteristics (referred to in this application as "agent affinity data"). An affinity database such as this may, for example, result in the present invention predicting that a specific agent performs best in interactions with callers of a similar age, and less well in interactions with a caller of a significantly older or younger age. Similarly this type of affinity database may result in the present invention predicting that an agent with certain agent affinity data handles callers originating from a particular geography much better than the agent handles callers from other geographies. As another example, the present invention may predict that a particular agent performs well in circumstances in which that agent is connected to an irate caller.

Though affinity databases are preferably used in combination with agent data and caller data that pass through a pattern matching algorithm to generate matches, information stored in affinity databases can also be used independently of agent data and caller data such that the affinity information is the only information used to generate matches. For instance, in some examples, the first level of processing may include a first computer model that relies on both a pattern matching algorithm and affinity data, and a second computer model that relies on affinity data alone.

Many of the techniques described here may be implemented in hardware or software, or a combination of the two. Preferably, the techniques are implemented in computer programs executing on programmable computers that each includes a processor, a storage medium readable by the processor (including volatile and nonvolatile memory and/or storage elements), and suitable input and output devices. Program code is applied to data entered using an input device to perform the functions described and to generate output information. The output information is applied to one or more output devices. Moreover, each program is preferably implemented in a high level procedural or object-oriented programming language to communicate with a computer system. However, the programs can be implemented in assembly or machine language, if desired. In any case, the language may be a compiled or interpreted language.

Each such computer program is preferably stored on a storage medium or device (e.g., CD-ROM, hard disk or magnetic diskette) that is readable by a general or special purpose programmable computer for configuring and operating the computer when the storage medium or device is read by the computer to perform the procedures described. The system also may be implemented as a computer-readable storage medium, configured with a computer program, where the storage medium so configured causes a computer to operate in a specific and predefined manner.

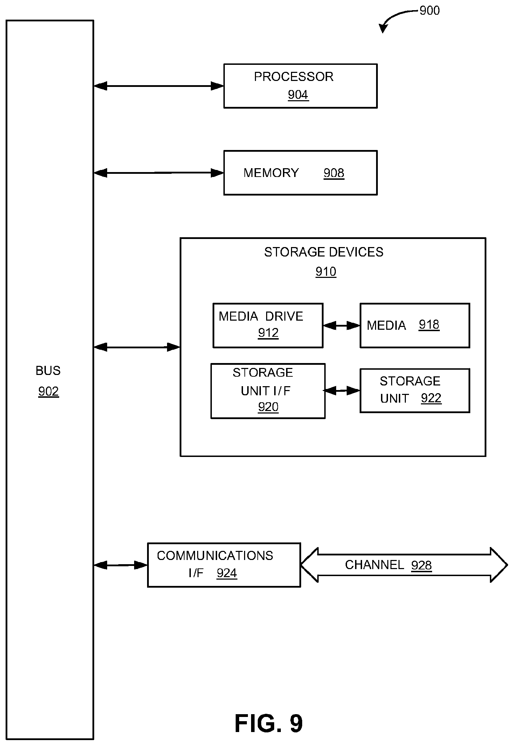

**Figure 9** illustrates a typical computing system 900 that may be employed to implement processing functionality in embodiments of the invention. Computing systems of this type may be used in clients and servers, for example. Those skilled in the relevant art will also recognize how to implement the invention using other computer systems or architectures. Computing system 900 may represent, for example, a desktop, laptop or notebook computer, hand-held computing device (PDA, cell phone, palmtop, etc.), mainframe, server, client, or any other type of special or general purpose computing device as may be desirable or appropriate for a given application or environment. Computing system 900 can include one or more processors, such as a processor 904. Processor 904 can be implemented using a general or special purpose processing engine such as, for example, a microprocessor, microcontroller or other control logic. In this example, processor 904 is connected to a bus 902 or other communication medium.

Computing system 900 can also include a main memory 908, such as random access memory (RAM) or other dynamic memory, for storing information and instructions to be executed by processor 904. Main memory 908 also may be used for storing temporary variables or other intermediate information during execution of instructions to be executed by processor 904. Computing system 900 may likewise include a read only memory ("ROM") or other static storage device coupled to bus 902 for storing static information and instructions for processor 904.

The computing system 900 may also include information storage system 910, which may include, for example, a media drive 912 and a removable storage interface 920. The media drive 912 may include a drive or other mechanism to support fixed or removable storage media, such as a hard disk drive, a floppy disk drive, a magnetic tape drive, an optical disk drive, a CD or DVD drive (R or RW), or other removable or fixed media drive. Storage media 918 may include, for example, a hard disk, floppy disk, magnetic tape, optical disk, CD or DVD, or other fixed or removable medium that is read by and written to by media drive 912. As these examples illustrate, the storage media 918 may include a computer-readable storage medium having stored therein particular computer software or data.

In alternative embodiments, information storage system 910 may include other similar components for allowing computer programs or other instructions or data to be loaded into computing system 900. Such components may include, for example, a removable storage unit 922 and an interface 920, such as a program cartridge and cartridge interface, a removable memory (for example, a flash memory or other removable memory module) and memory slot, and other removable storage units 922 and interfaces 920 that allow software and data to be transferred from the removable storage unit 918 to computing system 900.

Computing system 900 can also include a communications interface 924. Communications interface 924 can be used to allow software and data to be transferred between computing system 900 and external devices. Examples of communications interface 924 can include a modem, a network interface (such as an Ethernet or other NIC card), a communications port (such as for example, a USB port), a PCMCIA slot and card, etc. Software and data transferred via communications interface 924 are in the form of signals which can be electronic, electromagnetic, optical or other signals capable of being received by communications interface 924. These signals are provided to communications interface 924 via a channel 928. This channel 928 may carry signals and may be implemented using a wireless medium, wire or cable, fiber optics, or other communications medium. Some examples of a channel include a phone line, a cellular phone link, an RF link, a network interface, a local or wide area network, and other communications channels.

In this document, the terms "computer program product," "computer-readable medium" and the like may be used generally to refer to physical, tangible media such as, for example, memory 908, storage media 918, or storage unit 922. These and other forms of computer-readable media may be involved in storing one or more instructions for use by processor 904, to cause the processor to perform specified operations. Such instructions, generally referred to as "computer program code" (which may be grouped in the form of computer programs or other groupings), when executed, enable the computing system 900 to perform features or functions of embodiments of the present invention. Note that the code may directly cause the processor to perform specified operations, be compiled to do so, and/or be combined with other software, hardware, and/or firmware elements (e.g., libraries for performing standard functions) to do so.

In an embodiment where the elements are implemented using software, the software may be stored in a computer-readable medium and loaded into computing system 900 using, for example, removable storage media 918, drive 912 or communications interface 924. The control logic (in this example, software instructions or computer program code), when executed by the processor 904, causes the processor 904 to perform the functions of the invention as described herein.

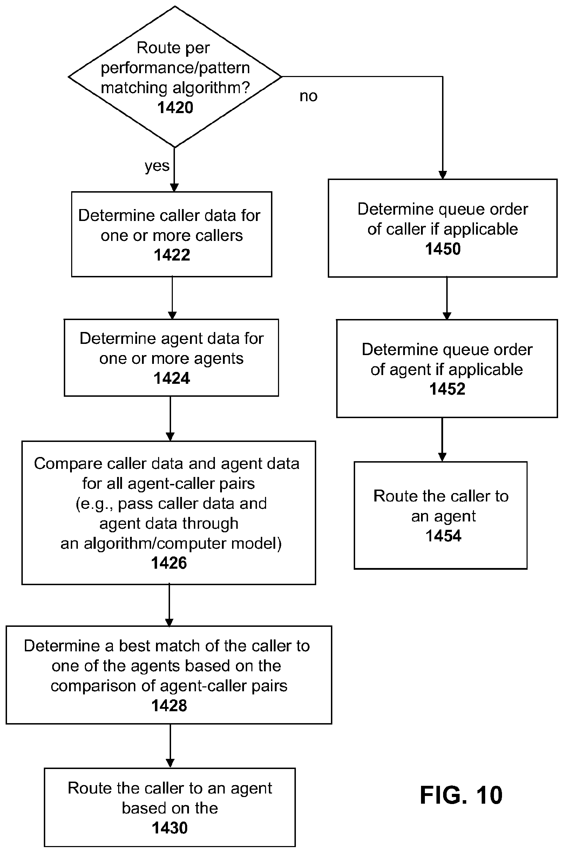

**Figure 10** illustrates an exemplary method for mapping and routing callers to agents where a first portion or fraction of callers is routed based on a performance based and/or pattern matching algorithm and a second portion or fraction of callers is routed based on conventional, essentially random, routing method such as queue based routing. Accordingly, a routing system first determines how the caller is to be routed at 1420. For instance, the system may map callers and agents in various ratios depending on the settings input by the contact center. For example, if the setting is at 80, or 80%, the system would map 80% of the caller-agent pairs based on performance and/or pattern matching algorithms and the remaining 20% of caller-agent pairs based on other methods such as queue order.

Exemplary performance based and/or pattern matching methods for routing callers to agents includes rating agents on performance, comparing agent data and caller data and matching per a pattern matching algorithm, creating computer models to predict outcomes of agent-caller pairs, or combinations thereof. In particular, one exemplary method for increasing the chances of an optimal interaction includes combining agent grades (which may be determined from grading or ranking agents on desired outcomes), agent demographic data, agent psychographic data, and other business-relevant data about the agent (individually or collectively referred to in this application as "agent data"), along with demographic, psychographic, and other business-relevant data about callers (individually or collectively referred to in this application as "caller data"). Agent and caller demographic data can comprise any of: gender, race, age, education, accent, income, nationality, ethnicity, area code, zip code, marital status, job status, credit score, and the like. Agent and caller psychographic data can comprise any of introversion, sociability, desire for financial success, film and television preferences, and the like.

The exemplary method may include determining caller data associated with one or more callers (e.g., a caller on hold), determining agent data associated with one or more agents (e.g., one or more available agents), comparing the agent data and the caller data (e.g., via a pattern matching algorithm), and matching the caller to an agent to increase the chance of an optimal interaction. In particular, at 1422, caller data (such as a caller demographic or psychographic data) is determined or identified for a caller. One way of accomplishing this is by retrieving caller data from available databases by using the caller's contact information as an index. Available databases include, but are not limited to, those that are publicly available, those that are commercially available, or those created by a contact center or a contact center client. In an outbound contact center environment, the caller's contact information is generally known beforehand. In an inbound contact center environment, the caller's contact information can be retrieved by examining the caller's CallerID information or by requesting this information of the caller at the outset of the contact, such as through entry of a caller account number or other caller-identifying information. Other business-relevant data such as historic purchase behavior, current level of satisfaction as a customer, or volunteered level of interest in a product may also be retrieved from available databases.

At 1424, agent data for one or more agents is identified or determined. One method of determining agent demographic or psychographic data can involve surveying agents at the time of their employment or periodically throughout their employment. Such a survey process can be manual, such as through a paper or oral survey, or automated with the survey being conducted over a computer system, such as by deployment over a web-browser. In some example, the method uses agent grades, demographic, psychographic, and other business-relevant data, along with caller demographic, psychographic, and other business-relevant data, other embodiments of the exemplary methods and systems can eliminate one or more types or categories of caller or agent data to reduce the time to answer, computing power, or storage necessary.

The agent data and caller data may then be compared at 1426. For instance, the agent data and caller data can be passed to a computational system for comparing caller data to agent data for each agent-caller pair, e.g., the caller data and agent data is compared in a pair-wise fashion for each potential routing decision. In one example, the comparison is achieved by passing the agent and caller data to a pattern matching algorithm to create a computer model that matches each caller with each agent and estimates the probable outcome of each matching along a number of optimal interactions, such as the generation of a sale, the duration of contact, or the likelihood of generating an interaction that a customer finds satisfying.

The pattern matching algorithm to be used in the exemplary methods and system can comprise any correlation algorithm, such as a neural network algorithm or a genetic algorithm. To generally train or otherwise refine the algorithm, actual contact results (as measured for an optimal interaction) are compared against the actual agent and caller data for each contact that occurred. The pattern matching algorithm can then learn, or improve its learning of, how matching certain callers with certain agents will change the chance of an optimal interaction. In this manner, the pattern matching algorithm can then be used to predict the chance of an optimal interaction in the context of matching a caller with a particular set of caller data, with an agent of a particular set of agent data. Preferably, the pattern matching algorithm is periodically refined as more actual data on caller interactions becomes available to it, such as periodically training the algorithm every night after a contact center has finished operating for the day.

The pattern matching algorithm may create or use a computer model reflecting the predicted chances of an optimal interaction for each agent and caller matching. Preferably, the computer model will comprise the predicted chances for a set of optimal interactions for every agent that is logged in to the contact center as matched against every available caller. Alternatively, the computer model can comprise subsets of these, or sets containing the aforementioned sets. For example, instead of matching every agent logged into the contact center with every available caller, examples can match every available agent with every available caller, or even a narrower subset of agents or callers. Likewise, the present invention can match every agent that ever worked on a particular campaign - whether available or logged in or not - with every available caller. Similarly, the computer model can comprise predicted chances for one optimal interaction or a number of optimal interactions.

A computer model can also comprise a suitability score for each matching of an agent and a caller. The suitability score can be determined by taking the chances of a set of optimal interactions as predicted by the pattern matching algorithm, and weighting those chances to place more or less emphasis on a particular optimal interaction as related to another optimal interaction. The suitability score can then be used in the exemplary methods and systems to determine which agents should be connected to which callers.

Based on the pattern matching algorithm and/or computer model, the method further includes determining the agent having the best match to the caller at 1428. As will be understood, the best matching agent may depend on the pattern matching algorithm, computer model, and desired output variables and weightings selected by a particular call center. The caller is then routed to the best matching agent at 1430.

If the caller is selected at 1420 for mapping to an agent by a different method (e.g., not based on a performance and/or pattern matching algorithm), this particular exemplary method includes routing via an Automatic Call Distribution (ACD) queue order or the like by determining a queue order of the caller, if applicable, at 450. For example, if other callers are on hold waiting for an available agent, the caller may be queued with other callers, e.g., a system may order the callers in terms of hold time and preferentially map those callers that have been holding the longest. Similarly, the exemplary method includes determining a queue order of the agents, if applicable, at 1452 (for example, in a situation where multiple agents are available). Accordingly, the system generally operates to map the agent that has been waiting or idle the longest with the caller that has been holding the longest. The caller may then be routed to the agent at 454.

It is noted that in other examples, where callers are matched with at least a pattern matching algorithm (e.g., alone or in combination with performance based ranking of the agents), the different method may include performance based routing. This allows for comparing or benchmarking the pattern matching algorithm against performance based routing.

According to another aspect of the exemplary systems and methods described, a visual computer interface and printable reports may be provided to the contact center or their clients to allow them to, in a real-time or a past performance basis, monitor the statistics of agent to caller matches, measure the optimal interactions that are being achieved versus the interactions predicted by the computer model, as well as any other measurements of real time or past performance using the methods described herein. A visual computer interface for changing the number or portion of callers that are mapped via performance and/or pattern matching algorithms (as well as the weighting on an optimal interaction) can also be provided to the contact center or the contact center client, such that they can, as discussed herein, monitor the effect of the performance based data and/or pattern matching algorithms on one or more outcome variables.

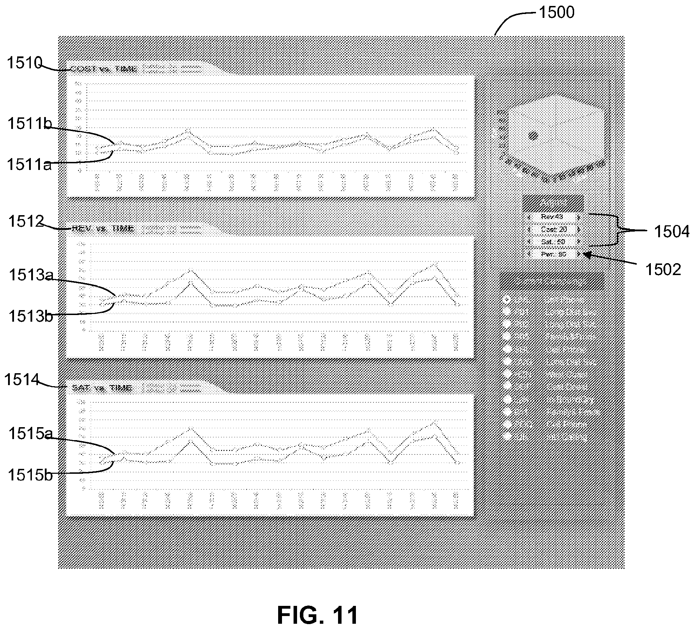

**Figure 11** illustrates an exemplary interface 1500 having a graphic element 1502 for adjusting the fraction or portion of callers that are mapped according to performance and/or pattern matching algorithms. It will be recognized that interface 1500 may be displayed within a browser page, portal page, or standalone user interface for a contact center routing system. Additionally, various other information and functionality may be included with interface 1500, but is omitted here for clarity.

In this example, interface 1500 displays a report of call center performance broken down by different output variables at 1510, 1512, and 1514. In particular, cost, revenue generation, and customer satisfaction are illustrated, but other output variables such as first call resolution, cancellation, or other variable outputs from the pattern matching algorithm(s) or computer model(s) of the system may be displayed. Interface 1500 further includes settings for desired weightings of different outcome variables of the pattern matching algorithms and computer models being used for routing callers to agents at 1504. In particular, selector 1504 includes selectors for adjusting the weighting of revenue, cost, and customer satisfaction in the call center routing algorithms and computer models. Various weighting methods and algorithms are described, for example, in copending U.S. Patent Application Serial No. 12/202,091, filed August 29, 8. Of course, various other pattern matching algorithms, computer models, and weighting methods for adjusting the desired outcomes are possible and contemplated.

Selector 1502 operates to adjust the "power" of the mapping system, e.g., the portion or percentage of callers that are mapped via performance and/or pattern matching algorithms as described. In this example, if selector 1502 is set to "100" the system routes all callers via the performance and/or pattern matching algorithms; alternatively, if selector 1502 is set to "0" the system does not route any callers via the performance and/or pattern matching algorithms. Selector 1502 may be adjusted in response to input from a mouse, input to a key board (e.g., arrow keys, numerical entries, and so on), or the like. Further, selector 1502 may be replaced or further include a "slider" element, drop-down selector, entry field for manually entering numbers or values, up-and-down arrows, and so on.

As described, routing a fraction of callers by an essentially random process provides an evaluation of the performance and/or pattern matching algorithms of the mapping system. For example, outcome variables can be compared for callers routed via the mapping system and those routed otherwise. For instance, interface 1500 includes a display 1510 of cost over time for the routing system with the mapping system on and off (i.e., "SatMap On" and "SatMap Off') as indicated by 1511a and 1511b respectively. Display 1510 illustrates that the cost is lower for callers routed via the mapping system than those mapped differently (e.g., by queue order or essentially randomly). As indicated in display 1512, revenue for callers routed via the mapping system, shown by 1513a, is greater than for other callers, shown by 1513b. Further, as indicated in display 1514, customer satisfaction for callers routed via the mapping system, shown by 1515a, is greater than for other callers, shown by 1515b.

It is noted that the information displayed by displays 1510, 1512, and 1514 are of past performance data; however, in other examples, interface 1500 may further operate to display estimated effects on one or more outcome variables by changing selector 1502. For instance, displaying the probable change in one or more of cost, revenue generation, or customer satisfaction by changing selector 1502. Various estimation methods and algorithms for estimating outcome variables are described, for example, in copending U.S. provisional Patent application serial no. 61/084,201, filed on July 28, 2008. In one example, the estimate includes evaluating a past time period of the same (or similar) set of agents and constructing a distribution of agent/caller pairs. Using each pair, an expected success rate can be computed via the pattern matching algorithm and applied to current information to estimate current performance (e.g., with respect to one or more of sales, cost, customer satisfaction, etc.). Accordingly, taking historical call data and agent information the algorithm can compute estimates of changing the power or number of callers mapped via the performance and/or pattern matching algorithms. It is noted that a comparable time (e.g., time of day, day of the week etc.) for the historical information may be important as performance will likely vary with time.

It will be appreciated that, for clarity purposes, the above description has described embodiments of the invention with reference to different functional units and processors. However, it will be apparent that any suitable distribution of functionality between different functional units, processors or domains may be used without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

The above-described embodiments of the present invention are merely meant to be illustrative and not limiting. Various changes and modifications may be made without departing from the invention in its broader aspects. The appended claims encompass such changes and modifications within the scope of the invention.

## Claims

1. A method for routing callers to agents in a call-center routing environment (104), the method comprising the acts of:
I. causing a first portion of callers to be mapped to agents according to a pattern matching algorithm based on comparing caller data associated with the callers and agent data associated with the agents;
II. causing the remaining portion of the callers to be mapped to agents differently than the first portion;
III. estimating at least one performance outcome variable (1500) of the call-center routing environment based on a particular setting of the number of callers of the first portion of the callers for display on the interface;
IV. adjusting the number of callers of the first portion of the callers with a graphical element (1502) of an interface based on the estimated at least one performance outcome variable, thereby adjusting the number of callers of the remaining portion of the callers;
V. changing the estimated at least one performance outcome variable in response to the adjusting the number of callers of the first portion of the callers for display on the interface; and
VI. routing the adjusted first portion of the callers to agents according to the pattern matching algorithm and routing the adjusted remaining portion of the callers to agents differently to the adjusted first portion of the callers.

2. The method of claim 1, wherein the first portion of callers is further mapped to agents based on performance based data associated with the agents.

3. The method of claim 1, wherein causing the second portion of callers to be mapped comprises mapping the callers according to a performance based order of the agents.

4. The method of claim 1, wherein the pattern matching algorithm comprises a neural network algorithm.

5. The method of claim 1, further comprising mapping the first portion of callers according to a computer model for predicting probable outcomes of caller-agent pairs.

6. A method for routing callers to agents in a call-center routing environment (104), the method comprising the acts of:
I. causing a first portion of callers to be mapped to agents according to performance based data associated with the agents;
II. causing the remaining portion of the callers to be mapped to agents differently than the first portion;
III. estimating at least one performance outcome variable (1500) of the call-center routing environment based on a particular setting of the number of callers of the first portion of the callers for display on the interface;
IV. adjusting the number of callers of the first portion of the callers with a graphical element (1502) of an interface based on the estimated at least one performance outcome variable, thereby adjusting the number of callers of the remaining portion of the callers;
V. changing the estimated at least one performance outcome variable in response to the adjusting the number of callers of the first portion of the callers for display on the interface; and
VI. routing the adjusted first portion of the callers to agents according to the performance based data and routing the adjusted remaining portion of the callers to agents differently to the adjusted first portion of the callers.

7. The method of claim 1 or claim 6, further comprising causing the second portion of callers to be mapped to agents based on an automatic call distribution queue order.

8. The method of claim 1 or claim 6, further comprising causing display of the at least one performance outcome variable associated with the first portion of callers compared to the second portion of callers.

9. Apparatus for routing callers to agents in a call-center routing environment (104), the apparatus comprising logic for carrying out the method of any preceding claim.

10. Computer readable storage medium comprising computer readable instructions for carrying out the method of any of claims 1 to 8.

## Patentansprüche

1. Verfahren zur Weiterleitung von Anrufern an Agenten in einer Anrufzentralen-Routing-Umgebung (104), wobei das Verfahren die folgenden Vorgänge umfasst:
I. Veranlassen, dass ein erster Teil von Anrufern Agenten gemäß einem Musterabgleichalgorithmus zugewiesen wird, basierend auf dem Vergleichen von Anruferdaten, die den Anrufern zugeordnet sind, und Agentendaten, die den Agenten zugeordnet sind;
II. Veranlassen, dass der verbleibende Teil der Anrufer auf andere Weise als der erste Teil den Agenten zugewiesen wird;
III. Schätzen von mindestens einer Leistungsergebnisvariablen (1500) der Anrufzentralen-Routing-Umgebung basierend auf einer bestimmten Einstellung der Anzahl von Anrufern des ersten Teils der Anrufer zur Anzeige auf der Benutzeroberfläche;
IV. Anpassen der Anzahl von Anrufern des ersten Teils der Anrufer mithilfe eines grafischen Elements (1502) einer Benutzeroberfläche basierend auf der geschätzten mindestens einen Leistungsergebnisvariablen, um dadurch die Anzahl der Anrufer des verbleibenden Teils der Anrufer anzupassen;
V. Ändern der geschätzten mindestens einen Leistungsergebnisvariablen in Reaktion auf das Anpassen der Anzahl von Anrufern des ersten Teils der Anrufer zur Anzeige auf der Benutzeroberfläche; und
VI. Weiterleiten des angepassten ersten Teils der Anrufer an Agenten gemäß dem Musterabgleichalgorithmus und Weiterleiten des angepassten verbleibenden Teils der Anrufer an Agenten auf andere Weise als des angepassten ersten Teils der Anrufer.

2. Verfahren nach Anspruch 1, wobei der erste Teil von Anrufern ferner Agenten basierend auf leistungsabhängigen Daten zugewiesen wird, die den Agenten zugeordnet sind.

3. Verfahren nach Anspruch 1, wobei das Veranlassen der Zuweisung des zweiten Teils der Anrufer das Zuweisen der Anrufer gemäß einer leistungsbasierten Reihenfolge der Agenten umfasst.

4. Verfahren nach Anspruch 1, wobei der Musterabgleichalgorithmus einen neuronalen Netzwerkalgorithmus umfasst.

5. Verfahren nach Anspruch 1, ferner umfassend das Zuweisen des ersten Teils der Anrufer gemäß einem Computermodell zum Vorhersagen wahrscheinlicher Ergebnisse von Anrufer-Agenten-Paaren.

6. Verfahren zur Weiterleitung von Anrufern an Agenten in einer Anrufzentralen-Routing-Umgebung (104), wobei das Verfahren die folgenden Vorgänge umfasst:
I. Veranlassen, dass ein erster Teil von Anrufern Agenten gemäß den leistungsbasierten Daten zugewiesen wird, die den Agenten zugeordnet sind;
II. Veranlassen, dass der verbleibende Teil der Anrufer auf andere Weise als der erste Teil den Agenten zugewiesen wird;
III. Schätzen von mindestens einer Leistungsergebnisvariablen (1500) der Anrufzentralen-Routing-Umgebung basierend auf einer bestimmten Einstellung der Anzahl von Anrufern des ersten Teils der Anrufer zur Anzeige auf der Benutzeroberfläche;
IV. Anpassen der Anzahl von Anrufern des ersten Teils der Anrufer mithilfe eines grafischen Elements (1502) einer Benutzeroberfläche basierend auf der geschätzten mindestens einen Leistungsergebnisvariablen, um dadurch die Anzahl der Anrufer des verbleibenden Teils der Anrufer anzupassen;
V. Ändern der geschätzten mindestens einen Leistungsergebnisvariablen in Reaktion auf das Anpassen der Anzahl von Anrufern des ersten Teils der Anrufer zur Anzeige auf der Benutzeroberfläche; und
VI. Weiterleiten des angepassten ersten Teils der Anrufer an Agenten gemäß den leistungsbasierten Daten und Weiterleiten des angepassten verbleibenden Teils der Anrufer an Agenten auf andere Weise als des angepassten ersten Teils der Anrufer.

7. Verfahren nach Anspruch 1 oder Anspruch 6, ferner umfassend das Veranlassen, dass der zweite Teil von Anrufern Agenten basierend auf einer automatischen Anrufverteilungswarteschlangenreihenfolge zugeordnet wird.

8. Verfahren nach Anspruch 1 oder Anspruch 6, ferner umfassend das Veranlassen der Anzeige der mindestens einen Leistungsergebnisvariablen, die dem ersten Teil von Anrufern zugeordnet ist, im Vergleich zu dem zweiten Teil von Anrufern.

9. Vorrichtung zur Weiterleitung von Anrufern an Agenten in einer Anrufzentralen-Routing-Umgebung (104), wobei die Vorrichtung eine Logik zum Ausführen des Verfahrens nach einem der vorhergehenden Ansprüche umfasst.

10. Computerlesbares Speichermedium mit computerlesbaren Anweisungen zur Durchführung des Verfahrens nach einem der Ansprüche 1 bis 8.

## Revendications

1. Procédé de routage des appelants vers des agents dans un environnement de routage de centre d'appels (104), le procédé comprenant les actions consistant à :
I. amener une première partie des appelants à être mise en correspondance avec des agents selon un algorithme de correspondance de modèle basé sur la comparaison de données d'appelant associées aux appelants et de données d'agent associées aux agents ;
II. amener la partie restante des appelants à être mise en correspondance avec des agents de façon différente de la première partie ;
III. estimer au moins une variable de résultat de performances (1500) de l'environnement de routage de centre d'appels sur la base d'un réglage particulier du nombre des appelants de la première partie des appelants à afficher sur l'interface ;
IV. ajuster le nombre des appelants de la première partie des appelants avec un élément graphique (1502) d'une interface sur la base de l'au moins une variable de résultat de performances estimée, ajustant ainsi le nombre des appelants de la partie restante des appelants ;
V. modifier l'au moins une variable de résultat de performances estimée en réponse à l'ajustement du nombre des appelants de la première partie des appelants à afficher sur l'interface ; et
VI. acheminer la première partie ajustée des appelants vers des agents conformément à l'algorithme de correspondance de modèle et acheminer la partie restante ajustée des appelants vers des agents de façon différente de la première partie ajustée des appelants.

2. Procédé selon la revendication 1, dans lequel la première partie des appelants est en outre mise en correspondance avec des agents sur la base de données basées sur les performances associées aux agents.

3. Procédé selon la revendication 1, dans lequel la mise en correspondance de la seconde partie des appelants comprend la mise en correspondance des appelants selon un ordre basé sur les performances des agents.

4. Procédé selon la revendication 1, dans lequel l'algorithme de correspondance de modèle comprend un algorithme de réseau neuronal.

5. Procédé selon la revendication 1, comprenant en outre la mise en correspondance de la première partie des appelants selon un modèle informatique afin de prédire les résultats probables des paires appelant-agent.

6. Procédé de routage des appelants vers des agents dans un environnement de routage de centre d'appels (104), le procédé comprenant les actions consistant à :
I. amener à être une première partie des appelants mise en correspondance avec des agents en fonction de données basées sur les performances associées aux agents ;
II. amener la partie restante des appelants à être mise en correspondance avec des agents de façon différente de la première partie ;
III. estimer au moins une variable de résultat de performances (1500) de l'environnement de routage de centre d'appels sur la base d'un réglage particulier du nombre des appelants de la première partie des appelants à afficher sur l'interface ;
IV. ajuster le nombre des appelants de la première partie des appelants avec un élément graphique (1502) d'une interface sur la base de l'au moins une variable de résultat de performances estimée, ajustant ainsi le nombre des appelants de la partie restante des appelants ;
V. modifier l'au moins une variable de résultat de performances estimée en réponse à l'ajustement du nombre des appelants de la première partie des appelants à afficher sur l'interface ; et
VI. acheminer la première partie ajustée des appelants vers des agents conformément aux données basées sur les performances et acheminer la partie restante ajustée des appelants vers des agents de façon différente de la première partie ajustée des appelants.

7. Procédé selon la revendication 1 ou la revendication 6, comprenant en outre la mise en correspondance de la seconde partie des appelants avec des agents sur la base d'un ordre de file d'attente de distribution automatique des appels.

8. Procédé selon la revendication 1 ou la revendication 6, comprenant en outre l'affichage de la ou des variables de résultats de performances associées à la première partie des appelants en comparaison de la seconde partie des appelants.

9. Appareil pour acheminer des appelants vers des agents dans un environnement de routage de centre d'appels (104), l'appareil comprenant une logique pour mettre en oeuvre le procédé selon l'une quelconque des revendications précédentes.

10. Support d'enregistrement lisible par ordinateur comprenant des instructions lisibles par ordinateur pour la mise en oeuvre du procédé selon l'une quelconque des revendications 1 à 8.
